# EUROPEAN PATENT APPLICATION

(11) **EP 4 726 023 A1**
(43) Date of publication of application: **15.04.2026**
(21) Application number: 24818850.0
(22) Date of filing: 05.06.2024
(51) Int. Cl.: C12G 3/07, C12H 1/12, C12H 1/02, B27M 1/00

(54) **IMPREGNATED WOOD PART, METHOD FOR IMPREGNATING THE WOOD PARTS AND USE THEREOF**

(30) Priority: 06.06.2023 ES 202330451
(71) Applicant: Mérida Sarrias, José Tomás, 29004 Málaga (ES); López Alba, José, 41003 Sevilla (ES)
(72) Inventor: Mérida Sarrias, José Tomás, 29004 Málaga (ES); López Alba, José, 41003 Sevilla (ES)
(74) Representative: Serrano Irurzun, Javier
(86) International application number: PCT/ES2024/070349
(87) International publication number: WO 2024/252047

(57) **Abstract**

The present invention relates to a novel method for impregnating wood and to the wood part that will be subsequently used in ageing liquors. The wood part is impregnated with a liquid food or with the dry residue of the liquid food.

## Description

The present invention relates to a new process for impregnating wood, or the piece of wood that will subsequently be used in the maceration of food-grade liquids.

### Background of the invention

The most classic method for ageing wines is ageing in wooden barrels. These previously seasoned barrels can be used to age liqueurs; however, this ageing process has some disadvantages, such as the long time periods required and the high fixed-asset costs, inter alia. These barrels where the wines have aged are called wine-seasoned barrels. These wine-seasoned barrels are impregnated with the wine they have held.

These wine-seasoned barrels are very interesting in the ageing of liqueurs; they can act as a vector for the transfer of certain compounds between the wine used for seasoning and the liqueur, contributing phenolic compounds from the grape and the wood to the liqueur. These compounds are very interesting and influence the colour, aroma, body, and mouthfeel of the beverages aged in this wood, making them responsible for many of the final organoleptic characteristics of the liqueur. The oak barrel is designed to contain the wine or distillate, preventing leaks, with wooden staves cut along the grain (with the vessels parallel to the cut of the wood). Even so, it is not possible to avoid some evaporation, due to its porosity. The thickness impregnated in a barrel, after 6 months of seasoning, does not usually exceed 1 to 2 millimetres in depth, out of the 25 to 30 millimetres thickness of the stave.

The liqueur aged in these barrels gains complexity as it becomes enriched with numerous compounds, most of them of a phenolic nature. The volatility of part of the distillate due to capillarity also has an effect on the distillate, causing it to refine and lose the aggressive character of the initial distillate.

Since this ageing technique is very interesting, it is advisable to accelerate this process. Accelerated ageing refers to any technique where an alcohol is aged using physical or chemical processes that lead to a significant reduction in the production time of said product. The main advantage of accelerated ageing is the reduction of costs associated with that stage.

The limiting step is the step where the wood is impregnated in a specific liquid, impregnated wood that will subsequently be used to age liqueurs. Techniques that have been used to accelerate impregnation are: microwaves or ultrasound.

Patent number US2012/0164300A1 describes a method for ageing an alcoholic beverage comprising putting said alcoholic beverage into contact with fine wood dust with a particle size of less than 1 mm in diameter for a period of time sufficient to transfer the desirable flavour and aroma to said alcoholic beverage.

Patent application number US2021/0017479 describes a method for producing an aged liqueur comprising placing a piece of wood inside the bottle of liqueur.

Therefore, it is very interesting to continue developing techniques that accelerate the wood impregnation process, which is inherently slow, optimising critical variables such as pressure and exposure time, in order to reduce the degradation of the phenolic compounds of interest and shorten impregnation times, so that these woods can later be used in the maceration of other food-grade liquids, such as in the ageing of liqueurs.

### Description of the invention

The problem that the present invention addresses is, on the one hand, to accelerate the wood impregnation processes and, on the other, to obtain woods where the liquid has impregnated a large percentage of the volume of the wood, since, as seen in the prior art, in modern woods the liquid does not penetrate more than a few millimetres into the wood.

The present invention improves the impregnability of the woods, enabling liquids to penetrate and circulate in the wood.

The densities of these woods are 0.55 g/cm³ at 0.75 g/cm³. The densities are the original densities of the woods prior to subjecting them to the process defined in this description.

The wood piece of the invention has a liquid impregnation in a range of 10% to 50% by volume with respect to the total volume of the wood piece or the dry residue is impregnated in a range of 10% to 50% by weight with respect to the total weight of the wood piece.

In the present invention, impregnability refers to lateral and axial impregnability, lateral impregnation being perpendicular to the wood vessel and axial or longitudinal impregnation being in the direction of the wood vessel.

The impregnated wood pieces have a thickness of at least 5 mm in one of their dimensions.

The liquids or dry residues that permeate the wood are a food-grade liquid or a dry residue of the food-grade liquid.

A first aspect of the invention relates to a piece of wood with a thickness of at least 5 mm in one of its dimensions, impregnated with a food-grade liquid or with the dry residue of the food-grade liquid, wherein the wood is selected from wood with a density ranging from 0.55 g/cm³ to 0.75 g/cm³ and the liquid is impregnated in the piece of wood in a range of 10% to 50% by volume relative to the total volume of the piece of wood or the dry residue is impregnated in a range of 10% to 50% by weight relative to the total weight of the piece of wood.

The main novelty is being able to impregnate pieces of wood with liquids or their dried residues, which can later be used in the maceration of food-grade liquids.

Therefore, the use of the wood piece of the invention for macerating food-grade liquids is also an aspect of the invention. Maceration is the process of putting liqueurs in contact with wood for a specific period of time. The aim of maceration is to remove the harsh flavours of raw alcohol, while adding distinctive flavour characteristics found in wood. Maceration in wood produces important changes in food-grade liquids and specifically in liqueurs: it decreases alcoholic perception, increases the dry extract, its appearance changes from colourless to having straw-yellow tones, and they gain in aromatic and taste complexity.

The wood piece of the invention is of a suitable size for a container that holds the food-grade liquid to be macerated with the wood, for example, a bottle. The end consumer can complete the maceration of the food-grade liquid. Different pieces of wood from the invention can be combined over time or at the same time until the desired maceration is obtained by the end consumer or manufacturer. Therefore, another aspect of the invention is a bottle of food-grade liquid comprising the wood piece of the invention.

Another aspect of the invention is a barrel comprising pieces of wood of the invention inserted in the area in contact with the liquid. Inserting the wood of the invention into the barrels adds value and nuances to the liquid with which the barrel is filled.

Also an aspect of the invention is a barrel comprising the woods of the invention.

The process of the invention consists of forcing the impregnation of pieces of wood, thanks to a sequential system varying the pressure in the different steps, thereby shortening the time needed for the desired liquid to impregnate and remain in the wood.

Therefore, another aspect of the present invention relates to a process for impregnating a piece of wood with a food-grade liquid, characterised in that it comprises the following steps:
a) a vacuum step in which the piece of wood is treated at a pressure in a range of 0.01 atm to 0.1 atm in a watertight chamber;
b) an impregnation step in which, after step a), the watertight chamber is flooded with a food-grade liquid at a pressure in the range of 1 atm to 20 atm in the watertight chamber; and
c) a step of removing excess liquid in which, after step b), the excess food-grade liquid is extracted from the piece of wood at a pressure in a range of 0.05 atm to 0.1 atm in the watertight chamber.

### Brief description of the drawings

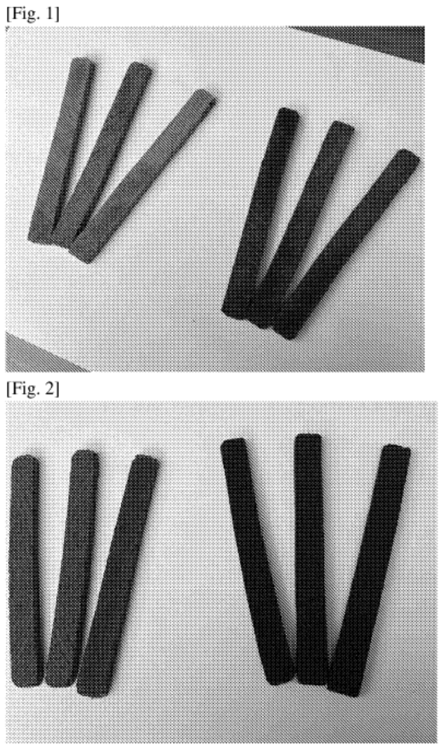

Figure 1 shows three unimpregnated samples on the left and three impregnated samples on the right according to the invention of an American oak wood with a previous step of light toasting and cross-cut at a 90-degree angle to the wood vessel;
Figure 2 shows three unimpregnated samples on the left and three impregnated samples on the right according to the invention of an American oak wood with a previous step of heavy toasting and cross-cut at a 90-degree angle to the wood vessel;

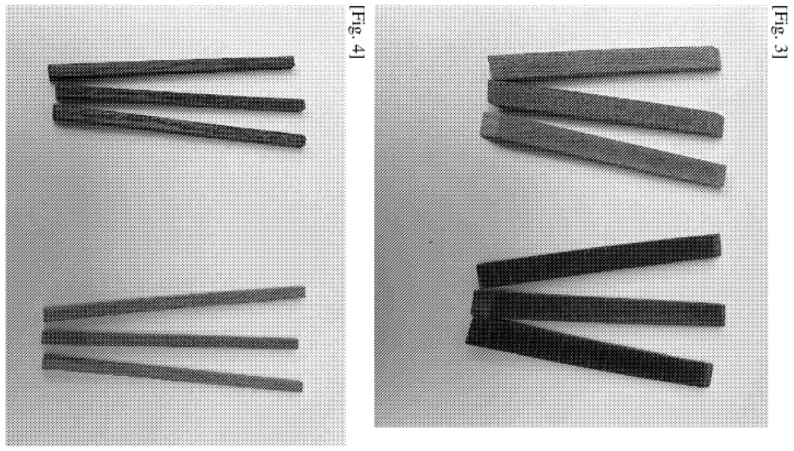

Figure 3 shows three unimpregnated samples on the left and three impregnated samples on the right according to the invention of a natural American oak wood cut at a 45-degree angle to the direction of the wood vessels; and
Figure 4 shows three unimpregnated samples on the right and three impregnated samples on the left according to the invention of an American oak wood, untoasted and with the grain cut along the grain of the wood vessels.

### Description of a preferred embodiment

As mentioned earlier, the first aspect of the invention relates to a piece of wood with a thickness of at least 5mm in one of its dimensions, impregnated with a food-grade liquid or with the dry residue of the food-grade liquid, where the wood is selected from wood with a density ranging from 0.55 g/cm³ to 0.75 g/cm³ and the liquid is impregnated in the piece of wood in a range of 10% to 50% by volume relative to the total volume of the piece of wood or the dry residue is impregnated in a range of 10% to 50% by weight relative to the total weight of the piece of wood.

Preferably, the liquid or dry residue of the liquid is impregnated in the piece of wood in a range of 20% to 40% by volume with respect to the total volume of the piece of wood. More preferably, in a range of 25% to 35%.

Preferably, the wood is selected from: American cherry, European cherry, acacia, American maple, European maple, chestnut, American oak and European oak.

Preferably, the piece of wood is selected from: a barrel cover, a barrel, a stave, a mixed stave, i.e. a stave with a combination of woods, staves cut along the grain of the wood, staves cross-cut to the wood, staves cut at angles between 90° and 0° to the wood, toasted staves, cut and toasted staves, or impregnated woods inside the barrel container.

Preferably, the food-grade liquid is selected from: wines; liqueurs; infusions of: spices, herbs, fruits, flowers and roots; fruit juices; coffee; cocoa; and liquid smoke. Preferably, liquid smoke is obtained by burning peat or wood and condensing the smoke obtained.

As mentioned earlier, another aspect is the use of the wood piece for macerating food-grade liquids: Preferably, liqueurs or wines are macerated. Preferably, the liqueurs or wines are selected from: whiskys, vodka, gins, armagnacs, cognacs, coffee liqueurs, blackcurrant liqueurs and vermouth.

Another aspect of the invention is the bottle of food-grade liquid comprising the wood piece of the invention and the food-grade liquid. Preferably, the piece of wood is in partial contact with the food-grade liquid. If the wood is only partially submerged in the food-grade liquid, leaving a portion outside the liquid, the capillary effect is enhanced; the wood is in contact with the food-grade liquid in one part and with the air that fills the bottle in another. Preferably, the food-grade liquid is a liqueur or wine.

The last aspect of the invention relates to a process for impregnating a piece of wood with a food-grade liquid, characterised in that it comprises the following steps:
a) a vacuum step where the piece of wood is treated at a pressure in a range of 0.01 atm to 0.1 atm in a watertight chamber;
b) an impregnation step where, after step a), the watertight chamber is flooded with a food-grade liquid at a pressure in the range of 1 atm to 20 atm in the watertight chamber; and
c) a step of removing excess liquid where, after step b), the excess food-grade liquid is extracted from the piece of wood at a pressure in a range of 0.05 atm to 0.1 atm in the watertight chamber.

Preferably, this cycle of steps a) to c) is repeated to achieve a greater concentration of the food-grade liquid in the piece of wood and therefore adapt the characteristics of the piece of wood according to the desired organoleptic characteristics.

Preferably, the process includes a drying step outside the watertight chamber. Preferably, it is dried until relative humidity is less than 10%.

Preferably, step a) is carried out during a time period ranging from 2 minutes to 300 minutes. Preferably, step b) is carried out during a time period ranging from 2 minutes to 420 minutes. Preferably, step c) is carried out during a time period ranging from 2 minutes to 60 minutes.

Preferably, step a) is carried out at a pressure range from 0.01 atm to 0.05 atm during a time period between 2 minutes and 180 minutes in a watertight chamber; step b) is carried out at a pressure range from 2 atm to 15 atm in the watertight chamber during a time period between 3 minutes and 360 minutes; and step c) is carried out at a pressure range 0.05 atm to 0.4 atm during a time between 10 minutes and 30 minutes.

Preferably, step b) is carried out at a pressure from 1 atm to 3 atm.

In a particular embodiment of the process of the invention, the wood piece is also a watertight chamber and the wood piece is materialised in a barrel. A barrel is understood to be a wooden cask used to make and store wines or liqueurs. Therefore, in a particular embodiment, the impregnation process refers to the process of impregnating a barrel with a food-grade liquid, characterised in that it comprises the following steps:
a) a vacuum step in which the barrel is treated at a pressure in a range of 0.01 atm to 0.1 atm;
b) an impregnation step in which, after step a), the barrel is flooded with a food-grade liquid at a pressure in a range of 1 atm to 3 atm;
c) a step of removing excess liquid in which, after step b), the excess food liquid is extracted from the barrel at a pressure in a range of 0.05 atm to 0.1 atm.

In a preferred embodiment, the process also includes, prior to step a), a step for toasting the wood. More specifically, for toasting and/or burning. In this step, the aromas that complement those of the wood are produced and the charred wood acts on the wine or liqueur like activated carbon. The subsequent toasting modifies the structure and chemical composition of the wood and makes it possible to increase the quantity and complexity of volatile compounds absent in dry wood. Preferably, it consists of applying a heat source to the wood, at a temperature that may vary from 130-230°C for periods of 30-45 minutes depending on the desired degree of toasting. As a result, thermal degradation occurs in the polymers that make up the wood (lignin, cellulose, hemicellulose and tannins), giving rise to small molecules or monomers of high aromatic intensity, which will impart the final characteristics. Depending on the temperature and toasting time, the wood is classified into different toasting grades. Toasting can be classified into three categories, according to the time and temperature on the surface of the wood. An example of light toasting would be toasting for 30 minutes at a temperature of 120°C to 130°C, medium toasting would be toasting for 30 to 40 minutes at a temperature of 160°C to 190°C, and an example of heavy toasting would be toasting for 45 minutes at a temperature of 200°C to 210°C.

Toasting is applied to unimpregnated wood, since it is a process prior to impregnation.

In another embodiment, the process includes a step prior to step a) in which at least one cut is made in the wood at an angle to the wood vessels ranging from 90° to 0°, particularly 45°.

Numerous combination possibilities open up: barrels with different staves, with different wines, with different seasonings, with staves with inserts of wood cut at different angles, etc. The process of the invention enables the combination of different toasting levels, impregnated liquids and cutting angles, thereby customising the characteristics and values that will be conferred to the final product.

### Examples

Table 1 specifies the examples of the invention with American oak pieces that are subjected to the process of the invention. The first step was carried out at 0.02 atm for 180 minutes, a second step at 12 atm for 360 minutes and a third step at a pressure of 0.1 atmospheres for 30 minutes. The food-grade liquid used is wine. The table indicates the preliminary and drying stages.

**Table 1. Trial data**

| Preliminary stages | Cut parallel to 1 wood vessel | Cut at a 45-degree angle to the wood vessel | Cross-cut and lightly toasted | Cut at a 90-degree angle to the wood vessel |
|---|---|---|---|---|
| Number of wood pieces | 20 | 10 | 10 | 10 |
| Measurements of each wood piece (mm) | 4.9 x 4.9 x 122 | 11.2 x 5.3 x 114 | 12 x 5.8 x 111 | 11.5 x 5.7 x 108 |
| Initial volume of liquid to be impregnated (ml) | 58.58 | 67.7 | 77.26 | 70.8 |
| Initial weight of 1 piece of wood (g) | 33.6 | 39.3 | 49.5 | 41 |
| Initial density of the piece of wood (g/ml) | 0.57 | 0.58 | 0.64 | 0.58 |
| Weight after first impregnation of the piece of wood (g) | 45.8 | 63.7 | 71.1 | 64 |
| Weight of impregnated liquid (g) | 12.2 | 24.4 | 21.6 | 23 |
| Weight of the piece of wood after first drying at 55° for 5 hours (g) | 39.4 | 50.1 | 59.3 | 51.7 |
| Weight of the piece of wood after second drying at 80° for 5 hours (g) | 37.2 | 46 | 54.8 | 47.9 |
| Difference after second drying (g) | 3.6 | 6.7 | 5.3 | 6.9 |
| Volume impregnated (ml) in the piece of wood | 10.4 | 20.9 | 18.5 | 19.7 |
| % volume absorbed by the piece of wood | 18 | 31 | 24 | 28 |
| Weight after second impregnation (g) | 46.3 | 64.4 | 72.3 | 63.3 |
| Drying at 60° for 5 hours (g) | 39 | 49.4 | 57.6 | 49.8 |
| Weight difference | 5.4 | 10.1 | 8.1 | 8.8 |

## Claims

1. A wood piece with a thickness of at least 5 mm in one of its dimensions impregnated with a food-grade liquid or with the dry residue of the food-grade liquid, **characterised in that** the wood is selected from wood with a density ranging from 0.55 g/cm³ to 0.75 g/cm³ and the liquid is impregnated in the piece of wood in a range of 10% to 50% by volume relative to the total volume of the wood piece or the dry residue is impregnated in a range of 10% to 50% by weight relative to the total weight of the wood piece.

2. Wood piece, according to claim 1, **characterised in that** the liquid is impregnated in the wood piece in a range of 25% to 40% by volume with respect to the total volume of the wood piece or the dry residue of the liquid is impregnated in a range of 25% to 40% by weight with respect to the total weight of the wood piece.

3. Wood piece, according to any of claims 1 to 2, **characterised in that** the wood is selected from: American cherry, European cherry, acacia, American maple, European maple, chestnut, American oak and European oak.

4. Wood piece, according to any of claims 1 to 3, **characterised in that** the wood piece is selected from: a barrel cover, a barrel, a stave, a mixed stave, staves cut along the grain of the wood, staves cross-cut to the grain of the wood, staves cut at angles between 90° and 0° to the grain of the wood, toasted staves, cut and toasted staves and impregnated woods inside the barrel container.

5. Wood piece, according to any of claims 1 to 4, **characterised in that** the food-grade liquid is selected from: wines; liqueurs; infusions of: spices, herbs, fruits, flowers and roots; fruit juices; coffee; cocoa; and liquid smoke.

6. Use of the wood piece, defined in any of claims 1 to 5, for macerating food liquids.

7. Use, according to claim 6, **characterised in that** the food-grade liquids are selected from liqueurs or wines.

8. A bottle of liqueur, **characterised in that** it comprises the wood piece defined in claims 1 to 5, and a food-grade liquid to be macerated.

9. A barrel, **characterised in that** it comprises the wood piece defined in claims 1 to 5.

10. A method for impregnating a wood piece, as defined in claims 1 to 5, with a food-grade liquid, **characterised in that** it comprises the following steps:
a) a vacuum step in which the piece of wood is treated at a pressure in a range of 0.01 atm to 0.1 atm in a watertight chamber;
b) an impregnation step in which, after step a), the watertight chamber is flooded with a food-grade liquid at a pressure in the range of 1 atm to 20 atm in the watertight chamber; and
c) a step of removing excess liquid in which, after step b), the excess food liquid is extracted from the piece of wood at a pressure in a range of 0.05 atm to 0.1 atm in the watertight chamber and optionally a drying stage outside the watertight chamber.

11. A process, according to claim 10, **characterised in that** step a) is carried out in a pressure range of 0.01 atm to 0.05 atm during a time period of 2 minutes to 180 minutes in a watertight chamber; step b) is carried out at a pressure in a range of 2 atm to 15 atm in the watertight chamber during a time period of 3 minutes to 360 minutes; and step c) is carried out at a pressure in a range of 0.05 atm to 0.4 atm during a time period of 10 minutes to 30 minutes.

12. Process, according to any of claims 10 to 11, **characterised in that** it comprises, prior to step a), a step for toasting the wood.

13. A method, according to any of claims 10 to 12, **characterised in that** it comprises a step prior to step a) of making at least one cut in the wood at an angle to the wood vessels.

14. An impregnation process, according to any of claims 10 to 13, **characterised in that** the pressure in step b) is in a range of 1 to 3 atm.

15. A method, according to claim 14, wherein the wood piece is the airtight chamber and is a barrel.
